**Europäisches Patentamt**

**European Patent Office**

**Office européen des brevets**

(19)

(11) Veröffentlichungsnummer: **0 035 748**
**B1**

(12) ## EUROPÄISCHE PATENTSCHRIFT

(45) Veröffentlichungstag der Patentschrift:
**16.05.84**

(51) Int. Cl.³: **H 02 M 3/335**

(21) Anmeldenummer: **81101558.5**

(22) Anmeldetag: **04.03.81**

(54) Gegentaktsättigungsumrichter mit hohem Wirkungsgrad.

(30) Priorität: **07.03.80 DE 3008887**

(43) Veröffentlichungstag der Anmeldung:
**16.09.81 Patentblatt 81/37**

(45) Bekanntmachung des Hinweises auf die Patenterteilung:
**16.05.84 Patentblatt 84/20**

(84) Benannte Vertragsstaaten:
**CH FR GB IT LI NL SE**

(56) Entgegenhaltungen:
**DE - A - 1 538 987**
**DE - A - 2 658 456**
**FR - A - 1 359 664**
**US - A - 2 852 730**
**US - A - 3 327 244**

(73) Patentinhaber: **SIEMENS AKTIENGESELLSCHAFT,**
**Berlin und München Wittelsbacherplatz 2,**
**D-8000 München 2 (DE)**

(72) Erfinder: **Schierjott, Rudolf, Edlinger Platz 4,**
**D-8000 München 90 (DE)**

## Gegentaktsättigungsumrichter mit hohem Wirkungsgrad

Die Erfindung betrifft einen Gegentaktsättigungsumrichter mit zwei abwechselnd den Primärkreis eines Übertragers mit einer am Eingang des Gegentaktsättigungsumrichters anliegenden Gleichspannung beaufschlagenden Schalttransistoren, deren Steuereingänge über eine gemeinsame, z. B. an einem Spannungsteiler anliegende Basiswicklung des Primärkreises verknüpft sind.

In Schaltumrichtern wird die Umwandlung einer Gleichspannung in eine oder mehrere galvanisch getrennte Gleichspannungen durchgeführt. Dabei wird die Eingangsgleichspannung durch schnellschaltende Transistoren in eine Rechteckspannung im kHz-Bereich umgeformt und mit Hilfe eines Transformators übertragen. Der Transformator dient zur galvanischen Trennung von Ausgangs- und Eingangskreisen und bei Sperrwandlern auch zur Energiespeicherung. Um die benötigte Ausgangsgleichspannung zu erhalten, wird die Sekundärspannung des Transformators gleichgerichtet und gefiltert.

Bei Schaltumrichtern unterscheidet man im wesentlichen drei Schaltungskonzepte, die je nach Leistungsbereich oder den speziell geforderten Eigenschaften verwendet werden, und zwar Eintaktumrichter, Gegentaktumrichter und Gegentaktsättigungsumrichter.

Die Eintaktumrichter gliedert man in Eintaktdurchflußumrichter und Eintaktsperrumrichter, wobei beim Eintaktdurchflußumrichter während der Leitphase des Schalttransistors Energie über eine Diode in eine Drossel im Lastkreis übertragen wird und in der Sperrphase des Schalttransistors die Drossel dann diese gespeicherte Energie über eine Freilaufdiode in den Lastkreis abgibt. Im Gegensatz dazu wird beim Eintaktsperrumrichter während der Leitphase des Schalttransistors Energie im Übertrager gespeichert und der Übertrager gibt die gespeicherte Energie in der Sperrphase des Schalttransistors über eine Diode in den Lastkreis ab.

Der Hauptnachteil der Eintaktumrichter ist die Schwierigkeit bei Lastwechseln mehrere angekoppelte Ausgangsspannungen in einem vorgegebenen Ausgangsspannungsbereich zu halten. Außerdem ist ein hoher Bauteileaufwand notwendig und in den üblichen Schaltungen wird nur ein Wirkungsgrad von unter 80% erreicht. Da der kurze Stromflußwinkel dieser Schaltungen hohe Innenwiderstände der Ausgangskreise bewirkt, müssen oftmals zusätzliche Nachregler in den Ausgangskreisen eingesetzt werden, die einen zusätzlichen Aufwand und eine weitere Wirkungsgradreduzierung bedeuten.

In fremdgesteuerten Gegentaktumrichtern werden zwei Schalttransistoren nacheinander, versetzt um die halbe Periodendauer, geschaltet. Ist der erste Schalttransistor eingeschaltet, so sperrt der zweite und Strom fließt über eine Diode in eine Drossel im Lastkreis. Wird nun der zweite Schalttransistor eingeschaltet, so ergibt sich ein Stromfluß über eine zweite Diode und die Drossel im Lastkreis. Durch diese Betriebsweise wird der Übertrager in beiden Richtungen magnetisiert. Dies bedeutet, daß die Induktionsänderungen doppelt so hoch sind wie in den Eintaktdurchfluß- und Eintaktsperrumrichtern, womit sich eine wesentlich höhere Ausgangsleistung ergibt. Die symmetrische Ansteuerung der beiden Schalttransistoren erfordert jedoch geeignete Regelschaltungen mit erheblichem Schaltungsaufwand.

Bei dem dritten Prinzip, den Gegentaktsättigungsumrichtern, sind wie bei den Gegentaktumrichtern zwei Schalttransistoren angeordnet. Die Schalttransistoren sind jedoch mit ihren Basen über eine gemeinsame Wicklung des Primärkreises verknüpft und werden über diese Wicklung, die z. B. über einen Spannungsteiler mit der Eingangsspannung des Gegentaktumrichters verknüpft ist, angesteuert. Dabei ist ihre Funktion derart, daß zunächst der höherverstärkende Transistor durchschaltet und dann über den durch die Basiswicklung eingeprägten Basisstrom solange leitend bleibt, bis der Übertrager in Sättigung geht und der nun durch das Absinken der Induktivität rasch ansteigende Kollektorstrom des Transistors so hoch wird, daß der Basissteuerstrom den Transistor nicht mehr in Sättigung halten kann und sich die Spannung am Übertrager durch die abnehmende magnetische Induktion umpolt.

Dadurch wird gleichzeitig die Basisspannung an dem höherverstärkenden Transistor negativ und der zweite Transistor wird leitend, bis der Vorgang nach erneuter Sättigung des Übertragers eine erneute Umschaltung bewirkt.

Gegentaktsättigungsumrichter haben einen Stromflußwinkel von nahezu 360° und somit geringe Innenwiderstände. Die erreichbare Ausgangsleistung entspricht denen fremdgesteuerter Gegentaktumrichter, da auch hier der Übertrager in beiden Richtungen magnetisiert wird und sich damit eine große Induktionsänderung ergibt. Bei konstanter Eingangsspannung erhält man in einem weiten Lastbereich weitgehend konstante Ausgangsspannungen. Werden mehrere Ausgangsspannungen benötigt, so können diese entsprechend den Sekundärwicklungen mit Gleichrichtern ohne weiteren Aufwand entnommen werden. Ein Schaltungsaufwand für die Ansteuerung der Transistoren entfällt.

Trotz dieser Vorteile und der günstigen, aufwandarmen Realisierung ist der Anwendungsbereich des Sättigungsumrichters auf die Übertragung kleiner Leistungen bei geringem Wirkungsgrad beschränkt. Ursache dieser Einschränkungen sind die Probleme beim Schaltvorgang der Leistungstransistoren. Da der Übertrager fast schlagartig in die Sättigung geht, steigt der Kollektorstrom im stromführenden Transistor sehr rasch an. Dieser befindet sich zu diesem Zeitpunkt infolge Basisstromüberschuß im Sättigungszustand und, nachdem er weiterhin mit Basisstrom versorgt wird, vergeht eine relativ lange Speicherzeit, bis durch Ansteigen der Kollektor-Emitter-Spannung die Abschaltung eingeleitet wird. Es entsteht ein unverhältnismäßig hoher Kollektorspitzenstrom, der nicht nur die Transistoren gefährlich überlasten kann, sondern vor allem hohe Schaltverluste zur Folge hat. Die hohen Stromspitzen bewirken zudem starke Spannungsschwankungen am Ein- und Ausgang des Umrichters sowie kräftige hochfrequente Störungen, die die Funkentstörungen erschweren. Der Energieinhalt der Stromspitze wird in der Streuinduktivität des Übertragers zwischengespeichert und anschließend einerseits in den Eingangskreis zurückgespeist, was gefährlich hohe Spannungsspitzen am abgeschalteten Transistor bewirkt, zum anderen auf die Ausgangskreise gespeist, wodurch besonders bei kleiner Last Ausgangsspannungen ungewollt ansteigen. Da die Stromspitzen beider Transistoren gewöhnlich unterschiedlich hoch sind, wird eine starke Unsymmetrie im Transformator verursacht, was eine ungleiche Lastverteilung auf Ausgangsdioden und Schalttransistoren bewirkt und in den Ausgängen unerwünschte Spannungswelligkeiten verursacht.

Aufgabe der Erfindung ist es, ausgehend von dem Prinzip des Gegentakt-Sättigungsumrichters einen Gegentaktsättigungsumrichter mit hohem Wirkungsgrad und großer Leistung bei geringem Teileaufwand bereitzustellen.

Diese Aufgabe wird gemäß der Erfindung dadurch gelöst, daß im gemeinsamen Emitterkreis der Schalttransistoren eine Drossel mit parallelgeschalteter Diode angeordnet ist. Bei einer besonders vorteilhaften Ausführungsform der Erfindung weist der die Übertragerwicklungen tragende Schenkel des Übertragungskernes mindestens eine, den Querschnitt des Mittelschenkels verengende, kerbartige Ausformung auf.

Durch den Spezialanschliff des Übertragermittelschenkels geht der geschwächte Teil des Mittelschenkels zuerst in Sättigung und der Magnetisierungsstrom im Übertrager steigt langsam an. Die Drossel in der gemeinsamen Emitterleitung der Schalttransistoren vergrößert den Spannungsabfall zu Beginn der Sättigung. Dieser Spannungsabfall wirkt der Basisspannung des gerade leitenden Transistors entgegen und bewirkt eine Ausräumung der Basis bereits zu Beginn der Übertragersättigung.

Einer weiteren Ausführungsform der Erfindung ist dem Basiskreis der Schalttransistoren ein Beschleunigungsglied aus einem Widerstand mit nachgeschaltetem Kondensator zugeordnet.

Durch das Beschleunigungsglied wird der Abschaltvorgang noch verstärkt, was sich auch beim Einschalten auswirkt. Die Transistoren werden durch das Beschleunigungsglied mit geringen Einschaltverlusten betrieben und der Abbau der Stromspitzen erleichtert damit die Funkentstörung beträchtlich. Über die Drossel wird eine sichere Symmetrierung der Transistorströme und Kerninduktion erreicht. Dabei dient die parallel geschaltete Diode zur Rückmagnetisierung der Drossel.

In vorteilhafter Weise werden die Ummagnetisierungsverluste im Übertrager durch den Schenkelanschliff stark reduziert, da der Kern nur an der vorgegebenen Stelle im Mittelschenkel voll ausgesteuert wird.

Ausführungsformen der Erfindung sind in den Zeichnungen dargestellt und werden im folgenden beispielsweise näher beschrieben. Es zeigt

Fig. 1 eine schematische Darstellung eines bekannten Gegentaktsättigungsumrichters,

Fig. 2 eine schematische Darstellung des erfindungsgemäßen Gegentaktsättigungsumrichters und

Fig. 3 eine schematische Darstellung des im erfindungsgemäßen Gegentaktsättigungsumrichters verwendeten Übertragerkerns.

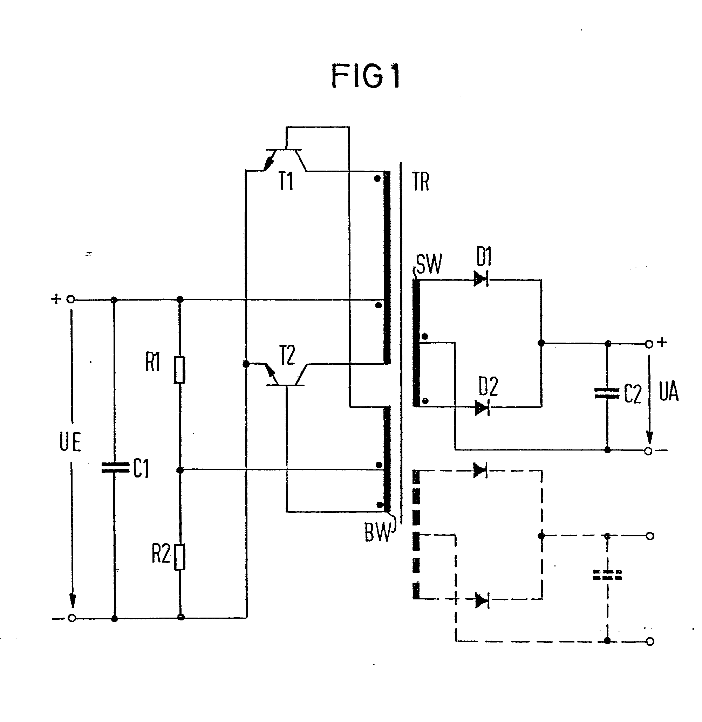

Bei dem in der Fig. 1 dargestellten bekannten Gegentaktsättigungsumrichters wird eine Eingangsgleichspannung UE in eine galvanisch von der Eingangsspannung getrennte Gleichspannung UA umgewandelt. Er besteht dabei aus einem Übertrager TR, der über in seinem Eingangskreis angeordnete Schalttransistoren T1 und T2 angesteuert wird. Seine Funktion ist dabei folgende:

Die an einem Kondensator C1; anliegende Eingangsspannung UE erzeugt über einen Widerstand R1 und eine die Basen der Transistoren T1 und T2 verknüpfende Basiswicklung BW einen Basisstrom. Der höherverstärkende Transistor, in diesem Falle der Transistor T1, schaltet durch und bleibt über den durch die Basiswicklung BW und einen Widerstand R2 eingeprägten Basisstrom so lange leitend, bis der Übertrager in die Sättigung geht und der nun durch das Absinken der Induktivität rasch ansteigende Kollektorstrom des Transistors T2 so hoch wird, daß der Basissteuerstrom den Transistor T1 nicht mehr in der Sättigung halten kann und sich die Spannung am Übertrager durch die abnehmende magnetische Induktion umpolt. Dadurch wird gleichzeitig die Basisspannung von T1 negativ und der Transistor T2 leitend, bis der Vorgang nach erneuter Sättigung des Übertragers eine erneute Umschaltung auf den Transistor T1 bewirkt.

Bei durchgeschaltetem Transistor T1 ist gleichzeitig die an der Sekundärwicklung anliegende Diode D1 leitend und gibt damit Energie an den Ausgang UA mit seinem Glättungskondensator C2 ab. Das gleiche gilt für die Diode D2, wenn der Transistor T2 leitend ist. Im allgemeinen wird im Betrieb der Widerstand R1 aus Gründen der Leistungsersparnis abgeschaltet.

Neben dem dargestellten Ausgang UA sind noch mehrere Ausgänge möglich (gestrichelte Darstellung).

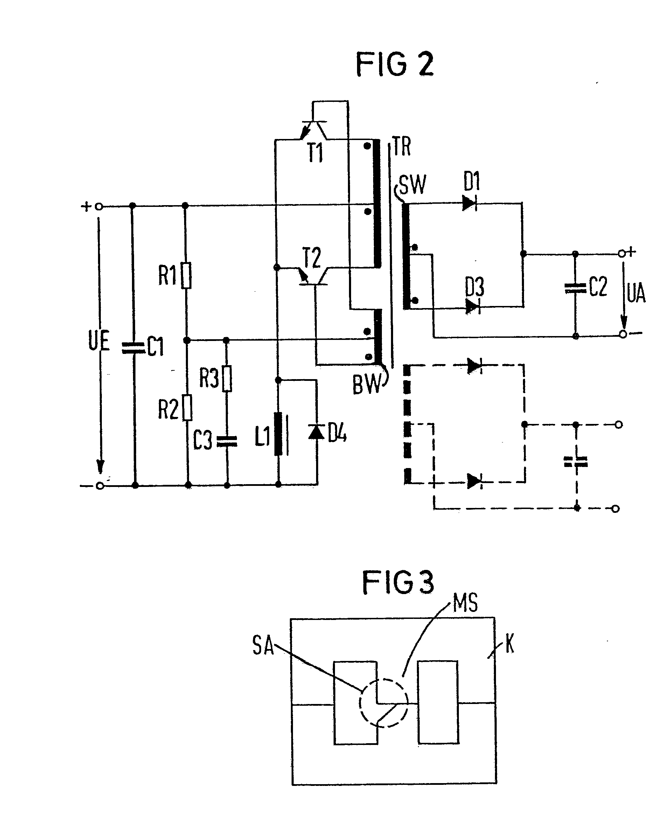

Aufbauend auf dem in der Fig. 1 dargestellten Gegentaktsättigungsumrichterprinzip gelangt man zu dem in der Fig. 2 dargestellten Gegentaktsättigungsumrichter mit hohem Wirkungsgrad. Zu diesem Zwecke wird der Gegentaktsättigungsumrichter mit einem Übertragerkern, der in der Fig. 3 dargestellt ist, versehen. Bei diesem Übertragerkern K ist der Mittelschenkel MS, der die Wicklungen des Übertragers trägt, mit einem Spezialanschliff versehen. Der Kern selbst setzt sich dabei aus zwei E-förmigen Einzelelementen zusammen, die stumpf aufeinanderstoßend den gesamten Kern bilden. Zusätzlich zu dieser Maßnahme befindet sich im Emitterkreis der Schalttransistoren T1 und T2 eine große Drossel L1 mit parallelgeschalteter Diode D4 und außerdem ist im Basiskreis gekoppelt mit der Basiswicklung BW ein Beschleunigungsglied aus einem Widerstand R3 mit nachgeschaltetem Kondensator C3 vorgesehen.

Aufbauend auf dem in der Fig. 1 beschriebenen Gegentaktsättigungsumrichter ist dabei die Funktion des Gegentaktsättigungsumrichters mit hohem Wirkungsgrad wie folgt. Der durch den Anschliff des Mittelschenkels MS geschwächte Teil des Übertragers ist bei durchgeschaltetem Schalttransistor T1 zuerst in Sättigung. Der Magnetisierungsstrom im Übertrager steigt jedoch verhältnismäßig langsam an, da durch die gescherte Permeabilität der Induktivitätsabfall im Übertrager langsam vor sich geht. Die Drossel L1, die im übrigen so dimensioniert ist, daß der Magnetisierungsstrom des luftspaltlosen Übertragers noch keinen wesentlichen Spannungsabfall an ihr bewirkt, vergrößert ihren Spannungsabfall, sobald der Strom im Übertrager kräftig ansteigt, also zu Beginn der Sättigung. Dieser Spannungsabfall wirkt der Basisspannung des leitenden Transistors T1 entgegen und bewirkt eine Ausräumung der Basis dieses Transistors schon zu Beginn der Übertragersättigung. Der so eingeleitete Abschaltvorgang wird durch das Beschleunigungsglied R3, C3 verstärkt und führt zu sehr kurzen Abschaltzeiten mit kleinen Spitzenströmen von etwa dem 1,1 bis 1,3fachen des Arbeitsstromes. Beim Umschaltvorgang auf den Transistor T2 bewirkt das Beschleunigungsglied außerdem ein rasches Einschalten des nachfolgenden stromführenden Transistors T2 mit hohem Basisstrom und dadurch geringen Einschaltverlusten. Damit ist es möglich, preisgünstige Transistoren zu verwenden, da die Anforderungen an Spitzenstrom, Schaltgeschwindigkeit und Verlustleistung niedrig sind.

Die Drossel L1 bewirkt eine sichere Symmetrierung der Dioden und der Transistorströme auch bei ungleich belasteten Halbwellen. Dabei dient die Diode D4 zur Rückmagnetisierung der Drossel L1.

Die Ummagnetisierungsverluste im Übertrager werden stark herabgesetzt, da der Kern nur an einer gewollten Schwachstelle im Schenkel voll ausgesteuert wird. Dadurch wird gleichzeitig die elektromagnetische Abstrahlung herabgesetzt.

Durch geeigneten Anschliff des Kernes kann die Arbeitsfrequenz des Umrichters in weiten Grenzen variiert werden, da der verbleibende luftspaltlose Querschnitt annähernd proportional der reziproken Schaltfrequenz ist.

Die Schaltung schützt sich außerdem bei Kurzschluß der Ausgänge selbst durch Abreißen der Schwingung.

Die Funk-Entstörung wird durch den Abbau der Stromspitzen sehr erleichtert, ebenso werden die durch die in der Streuinduktivität gespeicherten Energie hervorgerufenen Spannungsspitzen an den Ausgangskreisen und den Transistoren auf ein Minimum herabgesetzt. Es ergeben sich damit Gleichspannungswandler mit hohem Wirkungsgrad (ca. 90%), kleinem Innenwiderstand und geringem Platzbedarf bei Arbeitsfrequenzen von 20—100 kHz.

## Patentansprüche

1. Gegentaktsättigungsumrichter mit zwei abwechselnd den Primärkreis eines Übertragers (TR) mit einer am Eingang des Gegentaktsättigungsumrichters anliegenden Gleichspannung (UE) beaufschlagenden Schalttransistoren (T1, T2), deren Steuereingänge über eine gemeinsame Basiswicklung (BW) des Primärkreises verknüpft sind, dadurch gekennzeichnet, daß im gemeinsamen Emitterkreis der Schalttransistoren (T1, T2) eine Drossel (L1) mit parallelgeschalteter Diode (D4) angeordnet ist.

2. Gegentaktsättigungsumrichter nach Anspruch 1, dadurch gekennzeichnet, daß dem Basiskreis der Schalttransistoren (T1, T2) ein Beschleunigungsglied aus einem Widerstand (R3) mit nachgeschaltetem Kondensator (C3) zugeordnet ist.

3. Gegentaktsättigungsumrichter nach einem der Ansprüche 1 oder 2, dadurch gekennzeichnet, daß der die Übertragerwicklungen tragende Mittelschenkel (MS) des Übertragerkerns (K) mindestens eine den Querschnitt des Mittelschenkels (MS) verengende kerbartige Ausformung (SA) aufweist.

## Claims

1. Push-pull saturation converter with two switching transistors (T1, T2) which alternately supply the primary circuit of a transformer (TR) with a direct voltage (UE) connected to the input of the push-pull saturation converter and whose control inputs are connected via a common base winding (BW) of the primary circuit, characterized in that a choke (L1) having a parallel diode (D4) is arranged in the common emitter circuit of the switching transistors (T1, T2).

2. Push-pull saturation converter als claimed in claim 1, characterized in that the base circuit of the switching transistors (T1, T2) is assigned an acceleration element comprising a resistor (R3) with a following capacitor (C3).

3. Push-pull saturation converter as claimed in one of claims 1 or 2, characterized in that the middle leg (MS) of the transformer core (K), which carries the transformer windings, has a least one notch-like recess (SA) which narrows the cross-section of the middle leg (MS).

## Revendications

1. Convertisseur continu-continu symétrique et saturé comportant deux transistors de commutation (T1, T2) qui appliquent alternativement une tension continue (UE), existant sur l'entrée du convertisseur continu-continu symétrique et saturé, au circuit primaire d'un transformateur (TR) et dont les entrées de commande sont reliées par l'intermédiaire d'un enroulement de base commun (BW) du circuit primaire qui est relié par exemple à un diviseur de tension, caractérisé par le fait qu'une bobine d'arrêt (L1) avec une diode (D4) montée en parallèle est disposée dans le circuit d'émetteur commun des transistors de commutation.

2. Convertisseur continu-continu symétrique et saturé suivant la revendication 1, caractérisé par le fait qu'au circuit de base des transistors de commutation (T1, T2) est associé un élément accélérateur constitué par une résistance (R3) en aval duquel est monté un condensateur (C3).

3. Convertisseur continu-continu symétrique et saturé suivant une des revendications 1 ou 2, caractérisé par le fait que la branche centrale (MS), qui porte les enroulements du transformateur, du noyau (K) du transformateur comporte au moins un évidement (SA) du type d'une entaille qui réduit la section transversale de la branche centrale (MS).

# FIG 1

# FIG 2

# FIG 3